# EUROPEAN PATENT APPLICATION

(11) **EP 1 897 456 A2**
(43) Date of publication of application: **12.03.2008**
(21) Application number: 07000673.9
(22) Date of filing: 15.01.2007
(51) Int. Cl.: A41B 11/02, A41B 11/10, B29C 44/12, B29D 31/00

(54) **Protective sock**

(30) Priority: 08.09.2006 IT bs20060180
(71) Applicant: Busi, Fabio, 25082 Botticino (IT)
(72) Inventor: Busi, Fabio, 25082 Botticino (IT)
(74) Representative: Forattini, Amelia

(57) **Abstract**

A protective sock has a toe region, an ankle region, which surrounds the foot and the leg of the user around the ankle, and an Achilles tendon region which surrounds the rear part of the leg of the user above the heel. The sock is provided with protective pads molded onto the sock and covering the regions of the ankle and of the Achilles tendon.

## Description

As is known, soccer players use shin guards constituted by rigid contoured plates inserted between the leg and the sock in order to protect the tibia region.

However, the ankles and the Achilles tendon, regions which are subjected to continuous blows, are not protected adequately.

Reinforced socks, used in various sports, are known which are provided with padded regions in the points where they interact with the shoe, for example for ski boots, trekking boots or skating boots.

A sock capable of adequately protecting the lower part of the leg and in particular the ankle and the Achilles tendon is not commercially available.

This requirement is strongly felt especially for professional soccer players, whose ankles are tormented throughout the match by continuous kicks.

The aim of the present invention is to provide a protective sock which is capable of significantly reducing the effects of blows on the ankles and on the Achilles tendon region during the practice of soccer and in other sports and non-sports activities.

An object of the invention is to provide a protective sock which is comfortable in use and does not alter in any way the athlete's normal play.

Another object of the invention is to provide a protective sock which is capable of improving athletic performance by reducing the fatigue and pain caused by repeated blows.

This aim and these and other objects, which will become better apparent hereinafter, are achieved by a protective sock comprising a toe region, an ankle region, which surrounds the foot and the leg of the user around the ankle, and an Achilles tendon region, which surrounds the rear part of the leg of the user above the heel; characterized in that it comprises protective structures at least partially covering the regions of the ankle and of the Achilles tendon.

Further characteristics and advantages will become better apparent from the description of preferred but not exclusive embodiments of the invention, illustrated by way of non-limiting example in the accompanying drawings, wherein:

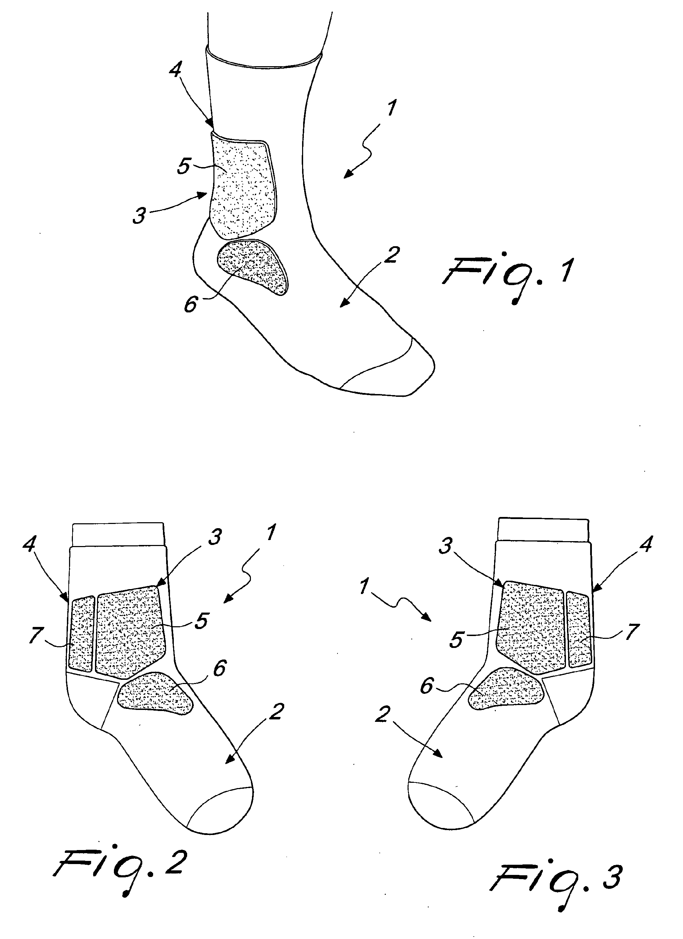

Figure 1 is a perspective view of the protective sock according to the invention, shown during use;
Figure 2 is a top plan view of one side of the protective sock;
Figure 3 is a top plan view of the opposite side, with respect to Figure 2, of the protective sock;

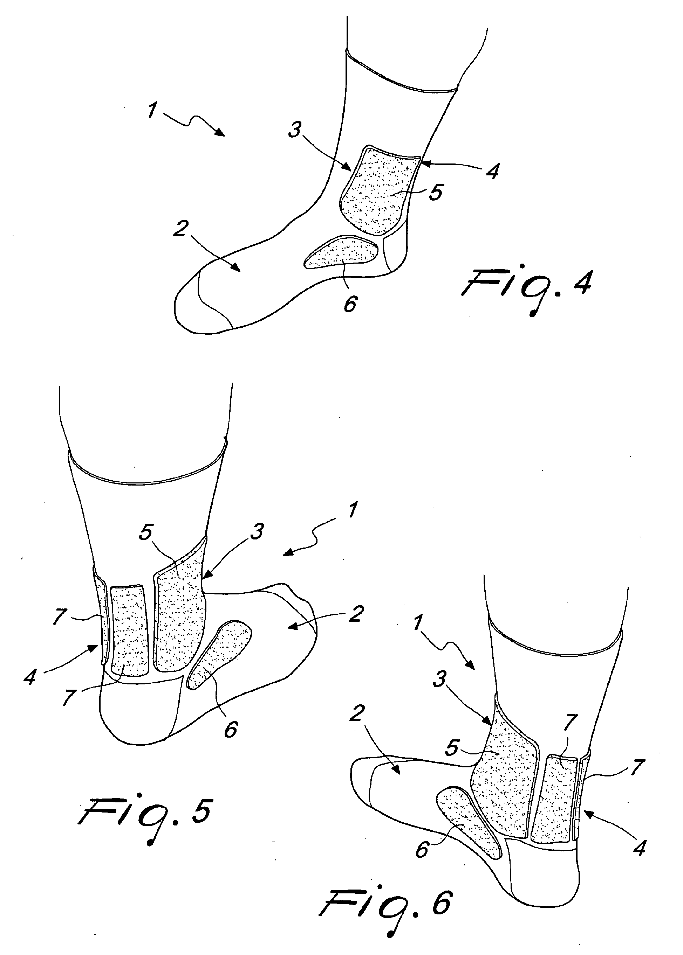

Figure 4 is a perspective view of the protective sock according to the invention, shown during use;
Figure 5 is a rear perspective view of the protective sock according to the invention, shown during use;
Figure 6 is a perspective view, from the opposite side with respect to Figure 5, of the protective sock according to the invention, shown during use;
Figure 7 is a schematic top plan view of the lasts used to manufacture the protective sock according to the invention;
Figure 8 is a schematic top plan view of two socks fitted on the respective lasts and of the plate which bears the contours of the protections to be applied to the socks;
Figure 9 is a schematic top plan view of the lasts in the molding position at the contour supporting plate;
Figure 10 is a schematic sectional side view of the press and the lasts in the molding position at the contour supporting plate;
Figure 11 is a schematic top plan view of the molding step;
Figure 12 is a sectional side view of the molding step;

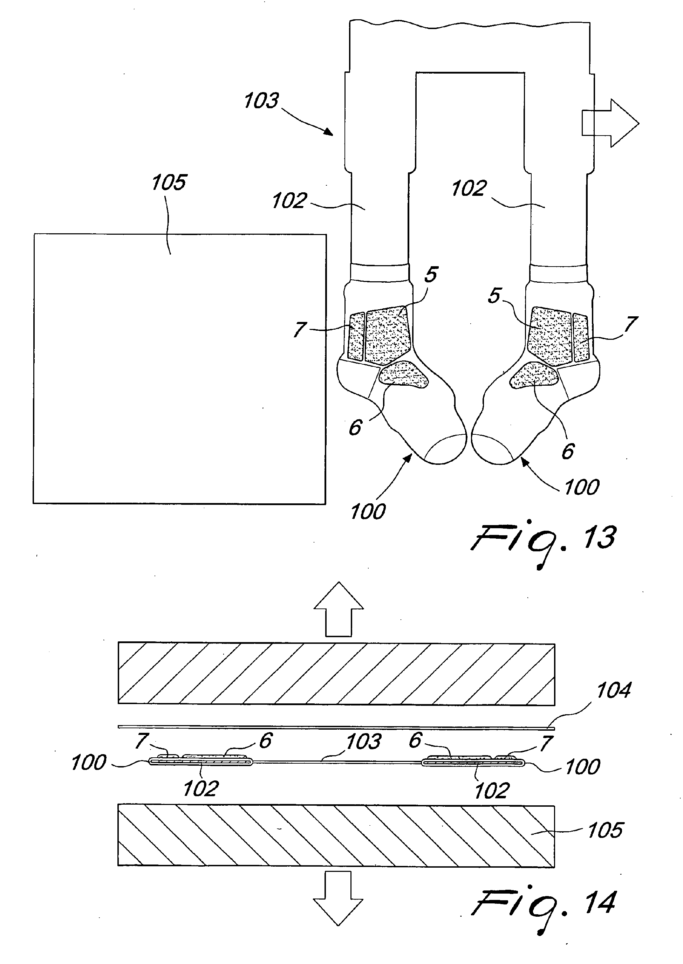

Figure 13 is a schematic top plan view showing the step of extracting the lasts provided with the socks after molding;
Figure 14 is a sectional side view of the extraction step.

With reference to the cited figures, a protective sock according to the invention, generally designated by the reference numeral 1, has a toe region 2, an ankle region 3, which surrounds the foot and the leg of the user around the ankle, and an Achilles tendon region 4 surrounding the rear part of the leg of the user above the heel.

According to the present invention, the protective sock is provided with protective structures which are suitable to cover at least partially the regions of the ankle and of the Achilles tendon.

Preferably, the protective structures are constituted by pads that are irremovably applied to the sock.

More preferably, the protective structure of the ankle region is constituted by a pair of pads, an upper pad 5 and a lower pad 6, while the protective structure of the Achilles tendon region is constituted by two pads 7, arranged side by side.

The above described arrangement of the protective structures allows to improve the flexibility and wearability of the sock.

The protective structures according to the invention are constituted by rubber pads embedded in the sock fabric.

The protective sock according to the present invention can be manufactured by means of the following method.

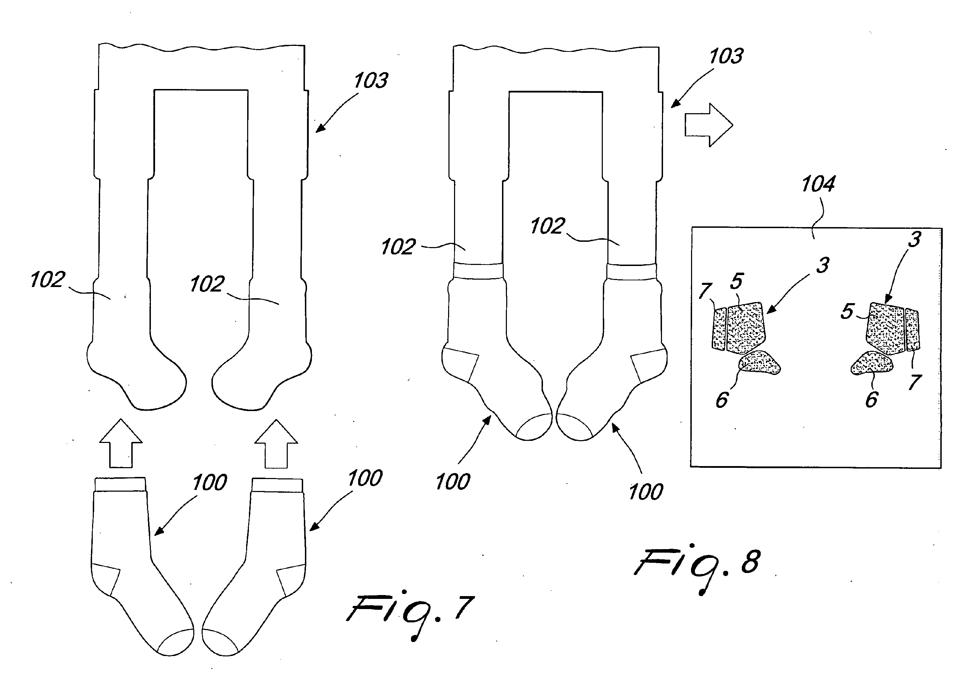

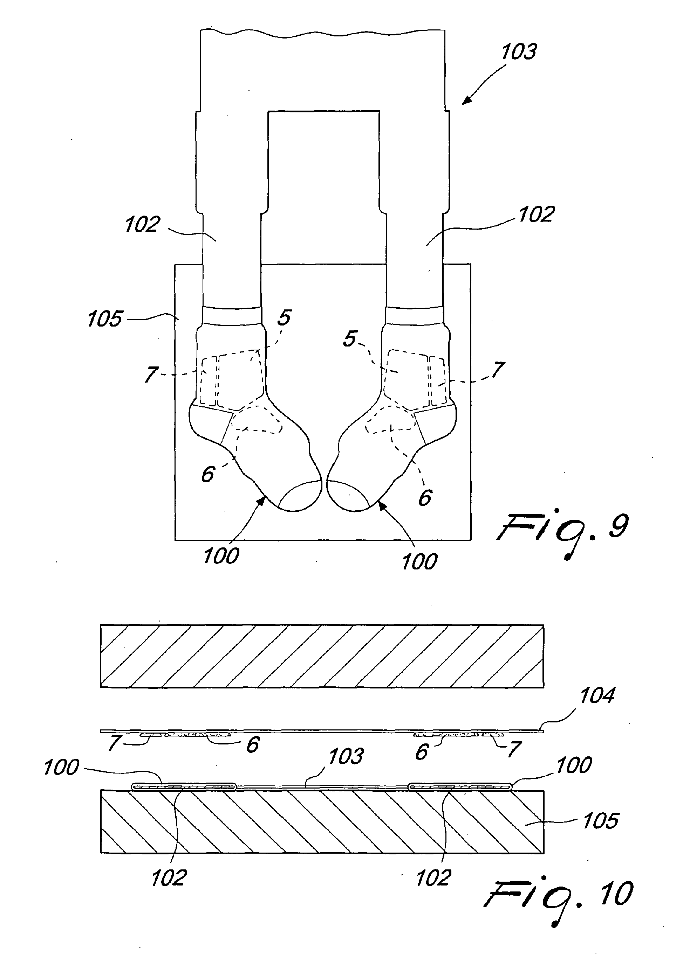

A pair of socks 100, produced with traditional systems, is arranged on lasts 102, which are shaped like the foot and the leg, as shown in Figures 7 and 8.

The lasts 102 are obtained from a U-shaped metal plate, designated by the reference numeral 103, which is arranged on the base surface 105 of a screen printing press.

A panel 104 is arranged on the U-shaped plate 103 and is provided with the pads 5, 6 and 7 to be applied to the sock in order to constitute the protective structures.

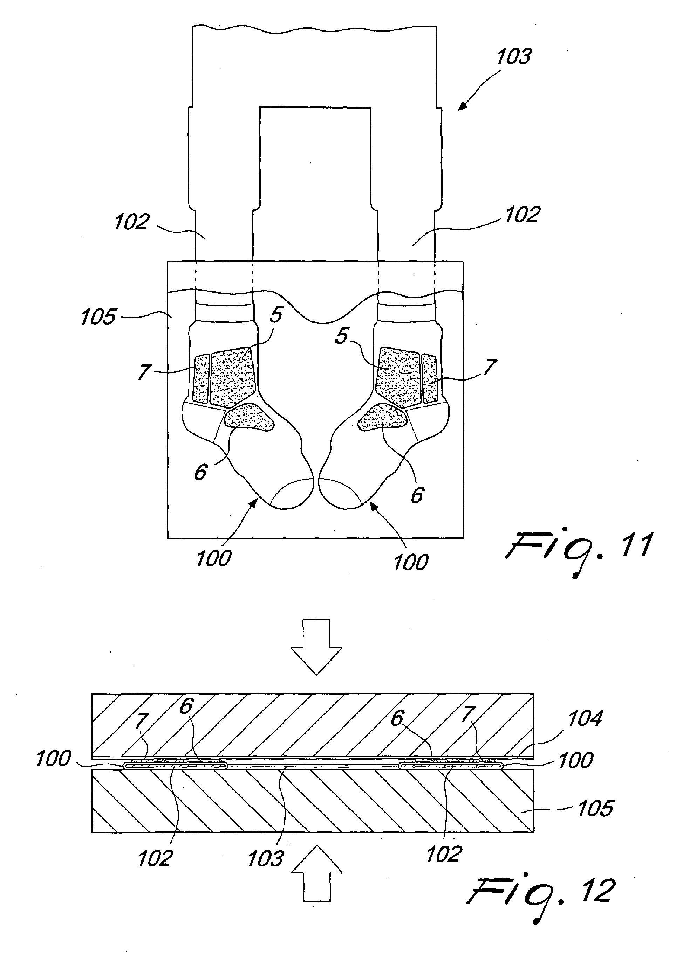

The pads 5, 6 and 7 are hot-molded, as shown schematically in Figures 9-12, on one side of the socks 100.

The U-shaped plate 103 is then extracted from the press, turned and repositioned on the base surface 105 in order to perform the hot molding of the pads 5, 6 and 7 on the other side of the socks.

The sock 100 is preferably internally made of natural fiber, 100% cotton, in order to allow good foot breathability, and is made externally with a combination of synthetic fibers which ensure elasticity and wear resistance.

The pads 5, 6 and 7 are made of a non-toxic material, for example silicone rubber, according to "Oeko-tex" standards, which has a high elasticity in order to allow the sock, once molded, to surround in an optimum and anatomically correct manner the ankle and the tendon.

Preferably, the thickness of the pads is comprised between 2.2 and 3.0 mm.

According to a preferred embodiment, the thickness of the pads is approximately 2.7 mm.

This thickness allows to protect the delicate parts of the foot, the tendon and ankle, in order to limit damage (cuts, abrasions, bruises) produced by the studs of shoes and by kicks during play tackles.

Furthermore, the special elastic structure of the sock in these points, further reinforced by molding, allows an effective adhesion and form-fit, helping to keep the ankle and the contact of the foot on the playing field more stable.

Protective pads can also be provided in the toe region 2 of the sock.

In practice it has been found that the invention achieves the intended aim and objects, a protective sock having been provided which is capable of reducing the damage caused by the frequent blows affecting the ankles and tendons of soccer players due to normal playing tackles.

The protective sock according to the invention allows professional players to limit damage without affecting in any way the playing performance and comfort. The protective sock according to the present invention can in fact be worn instead of an ordinary sock together with the conventional protections already used by players.

The protective sock according to the present invention is also advantageous in amateur practice and for children. Because of its characteristics of light weight and simplicity it does not require any particular adaptation for use.

It is evident that the protective sock according to the present invention can also be used for sports activities other than soccer, when it is desirable to protect the ankle and the Achilles tendon.

The protective sock according to the present invention can also be used for activities other than sports, for example for work and any other activity in which protection of the foot and leg is useful and desirable.

The present patent application claims the priority of Italian application No. BS2006A000180, assumed included herein by reference.

## Claims

1. A protective sock comprising a toe region, an ankle region, which surrounds the foot and the leg of the user around the ankle, and an Achilles tendon region, which surrounds the rear part of the leg of the user above the heel; **characterized in that** it comprises protective structures at least partially covering the regions of the ankle and of the Achilles tendon.

2. The protective sock according to claim 1, **characterized in that** said protective structures are constituted by pads irremovably applied to the sock.

3. The protective sock according to claim 1, **characterized in that** said protective structures are constituted by pads embedded in said sock.

4. The protective sock according to claim 1 or 2, **characterized in that** it comprises a protective structure for the ankle region, said protective structure being constituted by two pads: an upper pad and a lower pad.

5. The protective sock according to one or more of the preceding claims, **characterized in that** it comprises a protective structure for the Achilles tendon region, said protective structure being constituted by two pads arranged side by side.

6. The protective sock according to one or more of the preceding claims, **characterized in that** said pads are made of a non-toxic material which has high elasticity in order to allow the sock to surround the ankle and tendon in an optimum and anatomically correct manner.

7. The protective sock according to one or more of the preceding claims, **characterized in that** said pads are made of silicone rubber.

8. The protective sock according to one or more of the preceding claims, **characterized in that** said pads have a thickness comprised between 2.2 and 3.0 mm.

9. The protective sock according to one or more of the preceding claims, **characterized in that** said pads have a thickness of approximately 2.7 mm.

10. The protective sock according to one or more of the preceding claims, **characterized in that** it comprises protective pads in said toe region.

11. The protective sock according to one or more of the preceding claims, **characterized in that** said sock is made of natural fiber, 100% cotton, internally in order to ensure good foot breathability and is made externally with a combination of synthetic fibers which ensure elasticity and wear resistance.

12. A method for manufacturing a protective sock comprising a toe region, an ankle region, which surrounds the foot and the leg of the user around the ankle, and an Achilles tendon region, which surrounds the rear part of the leg of the user above the heel; and protective structures which are suitable to cover at least partially the ankle and Achilles tendon regions; said method comprising the steps of:
arranging a sock on a last which is provided with the contour of the foot and leg;
arranging the last on a base surface of a screen printing press;
positioning a panel provided with said pads on said plate;
actuating the press and hot-molding said pads onto one side of said sock;
extracting said plate from the press.

13. The method according to claim 12, **characterized in that** said last is obtained from a U-shaped metal plate, which has two mirror-symmetrical lasts for supporting a pair of socks.

14. The method according to claim 12 or 13, **characterized in that** after molding said pads on one side of said sock, the operation for molding said pads is repeated on the other side of said sock.
